Europäisches Patentamt

European Patent Office

Office européen des brevets

(11) Publication number: **0 194 675**
**B1**

(12) **EUROPEAN PATENT SPECIFICATION**

(45) Date of publication of patent specification: **07.06.89**

(51) Int. Cl.⁴: **G 11 B 5/71**

(21) Application number: **86103348.8**

(22) Date of filing: **12.03.86**

(54) Magnetic recording media.

(30) Priority: **13.03.85 JP 50031/85**

(43) Date of publication of application:
**17.09.86 Bulletin 86/38**

(45) Publication of the grant of the patent:
**07.06.89 Bulletin 89/23**

(84) Designated Contracting States:
**DE FR GB**

(56) References cited:
**EP-A-0 026 496**
**DD-A- 109 101**
**DE-A-2 522 780**
**DE-A-3 027 162**
**US-A-4 503 125**

(73) Proprietor: **Matsushita Electric Industrial Co., Ltd.**
**1006, Oaza Kadoma**
**Kadoma-shi Osaka-fu, 571 (JP)**

(72) Inventor: **Kurokawa, Hideo**
**23-29, Ikuno 1-chome**
**Katano City, 576 (JP)**
Inventor: **Mitani, Tsutomu**
**22-7, Kouri-nishino-cho**
**Neyagawa City, 572 (JP)**
Inventor: **Yonezawa, Taketoshi**
**i-605, 7, Tenno 2-chome**
**Ibaraki City, 567 (JP)**

(74) Representative: **Dr. Elisabeth Jung Dr. Jürgen Schirdewahn Dipl.-Ing. Claus Gernhardt**
**P.O. Box 40 14 68 Clemensstrasse 30**
**D-8000 München 40 (DE)**

Courier Press, Leamington Spa, England.

## Description

Field of the invention

The present invention relates to methods for making recording media which have thin layers of ferromagnetic metal as recording layers by which signals such as of video, audio and data are recorded in high density.

Description of the related art

Recently, recording media using ferromagnetic metal such as Co, Ni, Cr and Fe are drawing attention for realizing high density magnetic recording, and various investigations have been made to put it to practical use.

In the magnetic recording, when spacing is brought about between a recording layer and a magnetic head as electromagnetic convertor, spacing loss is caused thereby. Particularly, when the recording frequency is high, such as in a high density recording, the above-mentioned clearance should be made as small as possible, since the spacing loss becomes remarkable when the spacing exists. In recording or playback of signals of video and audio, the magnetic head is usually made to contact with the recording media. And further, even in recording of data signals, when the demand for reliability of recording is not severe, for instance, in case of a floppy disk, the recording media can be made to contact with the magnetic head. When the demand for reliability of recording is high, the magnetic head is made to float apart from the surface of the recording media to keep non-contact in order to avoid undesirable friction between the magnetic head and the recording media. However, even in such a high reliability multiple magnetic recording system, the recording media are constructed in a manner that the magnetic head contacts with the recording media at start or stop of the recording or playback. And further, since the flotation of the magnetic head above the head face causes a spacing loss, they are unsuitable for a high density recording. From the above viewpoint, considering the adaptation for high density recording in future, it is more desirable that the recording media contact with the magnetic head, thereby to realize and retain the reliability of recording.

That is, the magnetic recording system has a problem that is fundamentally different from optical recording system, because in the magnetic recording system the magnetic head generally contacts the recording media.

The aforementioned magnetic recording media, which have thin layers made of ferromagnetic metal such as Co, Cr, Ni and Fe as recording layer, have a large coercive force. Therefore, it is suitable for high density recording, for instance, vertical recording, and so on. However, when a protective layer is not formed on a surface of the ferromagnetic metal thin layer, formation of effective protective layer on the recording layer is advantageous to protect the recording layer from a damage by contacting with the magnetic head.

In conventional magnetic recording media, wherein magnetic powder mixed with binder is applied to the base film as substrate, so as to avoid problems caused by contact of the magnetic head and the magnetic recording media, a substance has been added to the binder to give resistance against wear and smoothness to the contact surface of the magnetic recording media. However, in the magnetic recording media having the ferromagnetic metal thin layer as recording layer, such improvements are intended in wear resistance, smoothness and running durability of the magnetic recording media per se as oxidizing surface of the recording layer. In such case a deterioration of the magnetic property of the recording layer can not be avoided. Therefore, it is necessary to keep the characteristics of the recording layer such as wear resistance, by forming a protective layer on the surface of the recording layer. And further, since such a protective layer brings about distance between the magnetic head and the recording layer, thickness of the protective layer should be as small as possible.

Hitherto, a protective layer containing organic substance as lubricating material and made by vacuum vapor deposition on the surface of the ferromagnetic metal has been developed. But since such protective layer has poor wear resistance, it could not bear long time of use. And further, although trials are made in forming a layer of amorphous carbon or graphite to the surface of the ferromagnetic metal layer by vacuum vapor deposition, spattering, an improvement of the smoothness could be reached only to a certain extent, while a sufficient wear resistance could not be obtained.

In case that the above-mentioned material is used as protective layer of magnetic recording media having a recording layer of the ferromagnetic metal thin layer, the thickness of the protective layer could not be decreased without losing the wear resistance. As a result, the distance from the magnetic head to the magnetic recording media becomes large, thereby generating a large spacing loss. And further, since the above-mentioned protective layer is worn by contacting with the magnetic head, fine powder of the protective layer material is produced and the powder sticks to the magnetic head, hence remarkably lowering quality and level of output due to clogging up and dropout.

Owing to the above-mentioned problems, the practical use of the high density magnetic recording media having the ferromagnetic metal thin layer as recording layer has been hitherto much restricted. Therefore, satisfactory high density recording can not be attained so long as the above-mentioned problems are not settled.

To solve the above-mentioned problems, a protective layer which is splendid in smoothness, wear resistance and adhesive ability is indispensable. Furthermore, the following conditions are required: the substrate or base material (hereinafter referred to as base material) such as a polyethylene base film (in case of tape-shaped magnetic recording media) is not damaged by temperature rising, while the protective layer is formed; a homogenous layer suitable for mass production can be formed, even if the thickness of the protect layer is small and the deposition rate of the protective layer is large.

It is thought that diamond is suitable as material of a protective layer satisfying the above-mentioned requirements. The diamond is a crystal having the highest hardness in all substances, and it is extremely chemically stable and is considered to be splended in the wear resistance and durability in various surroundings of usage. Concerning methods for forming a thin layer of the diamond, many reports have been made, and they are disclosed in the reference literatures as follows.

(1) Oyokikaikogaku (Applied Mechanical Engineering), July/1984, "Daiamondo Hakumaku No Teiatsugosei No Kenkyu" (Investigation of low pressure synthesis of diamond thin layer)

(2) Gendaikagaku (Modern Chemistry), September/1984, "Daiamondo No Teiatsugosei" (Low pressure synthesis of diamond)

(3) Nihon Sangyogijutsu Shinkokyokai (Japan Industrial Technology Promotion Association) Gijutsu Shiryo (Technical data) No. 138, June/1984, "Daiamondo No Teiatsugosei" (Low pressure synthesis of diamond).

However, all of them are in an academic researching stage, and have not been put into practice. And further, it is very difficult to use them as a forming means of a diamond protective layer for the magnetic recording media, because the above-mentioned methods need heating of the base material in high temperature (above 400°C), and the deposition velocity of the layer is lower (maximum 20 to 30 nm/minute).

Object and summary of the invention

The present invention is intended to solve the above-mentioned problems, and the purpose of the present invention is to obtain magnetic recording media having a protective layer which is splendid in wear resistance on a recording layer made of ferromagnetic metal.

From the EP—A—0 026 496 it is known to provide a protective overcoating for a magnetic alloy thin-film recording disc that includes a disc-shaped base over which a magnetic alloy film is formed to provide a magnetic recording medium, comprising an interfacial layer of a material bondable to both the magnetic medium of .the recording disc and to carbon and a layer of carbon formed by sputter deposition over said interfacial layer.

According to this prior art the invention relates to a method for making magnetic recording media by forming a recording layer on a base material and by forming an outer layer of carbon.

According to the invention such method is developed further either by the characteristic features of claim 1 or by the characteristic features of claim 8.

The inventive methods result in creating protective layers of carbon having high hardness in the magnetic recording media produced by the method according to the invention. The method can be executed under low-temperature and low-pressure conditions.

Brief description of the drawing

Fig. 1 is a sectional view showing a magnetic recording media of an embodiment of the present invention.

Fig. 2 is a schematic diagram of apparatus by which the present invention is put into practice.

Fig. 3 is a schematic illustration showing an image of electron microscope of a cross-section of the high hardness carbon layer formed by the PI-CVD method.

Fig. 4 is a schematic illustration showing an image of electron rays diffraction.

Fig. 5 is a characteristic diagram showing a result of secondary ion mass spectroscopic analysis.

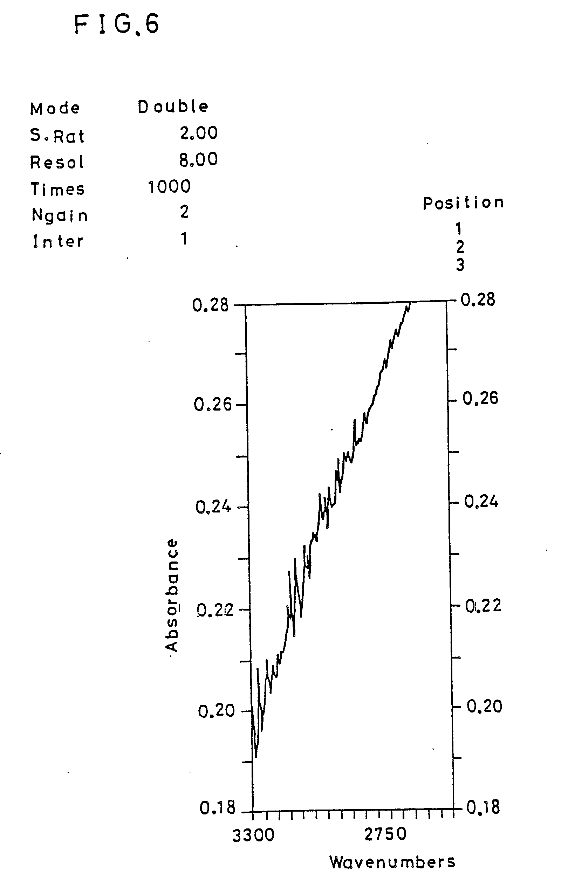

Fig. 6 is a characteristic diagram showing a result of infrared spectroscopic analysis.

Fig. 7 is a characteristic diagram showing a result of energy loss spectroscopic analysis.

Fig. 8 is a characteristic diagram showing still durability of magnetic recording media of the present invention.

Description of the preferred embodiment

In advance of explaining an embodiment of a product of a method according to the present invention, a forming method of high hardness carbon layer usable as protective layer according to the present invention is described.

Methane gas as raw material of a carbon layer to be achieved is made plasma in a pressure of 10—100 Pa, and ions in the plasma are blown to base material by potential difference. Thereby, it becomes possible to form a high hardness carbon layer in high deposition rate of about 500 nm/minute in normal temperature, i.e., without heat-·ing of base material. The above-mentioned method is called a plasma-injection chemical vapor deposition method (hereinafter referred to as PI-CVD method).

An apparatus for PI-CVD comprises a first vacuum chamber having plasma generating means of a non-electrode induction coupling type, an accelerating means to accelerate ions in the plasma toward the base material, and a second vacuum chamber into which the base material is put and which is connected with the first vacuum chamber in a manner to make a gas circulation between first and second vacuum chambers.

Hydrocarbon gas and inactive gas, such as argon gas, are introduced to the first vacuum chamber which is evacuated in advance, and therefore the pressure of the first vacuum chamber is adjusted to a predetermined pressure.

The first vacuum chamber has at least one of introducing ports through which gas is introduced, and further it has at least one of plasma jetting nozzle to blow the plasma to the base material. The hydrocarbon gas and the inactive gas may be mixed either before or after the introduction thereof into the first vacuum chamber.

The first vacuum chamber is connected with the second vacuum chamber in a manner to allow the gas to flow, wherein pressure is lower than that of the first vacuum chamber. Therefore, the mixed gas is able to flow only by pressure difference of the two vacuum chambers. The mixed gas is made plasma by the plasma generation means, after the pressure of the first vacuum chamber is adjusted to predetermined pressure.

Radio heating, microwave heating, heat decomposition and ion beam heating may be conceived as plasma generation means, but among them, the radio heating is most desirable because it hardly raises temperature of the base material.

Generated plasma is of low pressure of 10—100 Pa and a viscous flow, and therefore even only by a pressure difference between the first vacuum chamber and the second vacuum chamber the plasma is made to blow on the base material. And further, when an accelerating means based on direct current electric field, such that the base material side is of negative electric potential, is used, the ions in the plasma are accelerated and blown to the base material. By accelerating the ions, the flow of the plasma is directed toward the base material, and further, radical species and neutral seeds as well as the ions efficiently reach the base material, thus forming a layer of carbon.

In the radical species, carbon radicals and hydrocarbon radicals are greatly concerned with the formation of the layer. Since the carbon radicals form the layer by mutual reaction of the carbon radicals, a high bonding strength layer is formed. The hydrocarbon radicals are decomposed into carbon atoms, hydrogen atoms and hydrogen radicals on the surface of the base material by collision of ions or catalytic action of the hydrogen, thereby the layer being formed.

In the plasma wherein the inactive gas such as the hydrocarbon and argon gas is excited, there exist ions and radicals of carbon, hydrocarbon, hydrogen and argon, and further electrons. The ions and radical function as catalyst for dehydrogenation of the hydrocarbon, and further, they suppress deposition of graphitic carbon, thereby realizing deposition of only diamond type structure carbon.

Argon ions in the plasma are accelerated by accelerating means and they bombard the surface of the base material. By bombard energy, carbon-hydrogen bonds on the surface of layer are cut, and carbon content of the layer increases, and furthermore some parts of bonds between carbons are changed into diamond structure. Moreover, since the electrolytic dissociation voltage of hydrocarbon gas such as methane gas is 8—10 eV while a metastable voltage of argon gas is 11.53 eV, generation of the plasma is promoted and stabilized by the Penning effect.

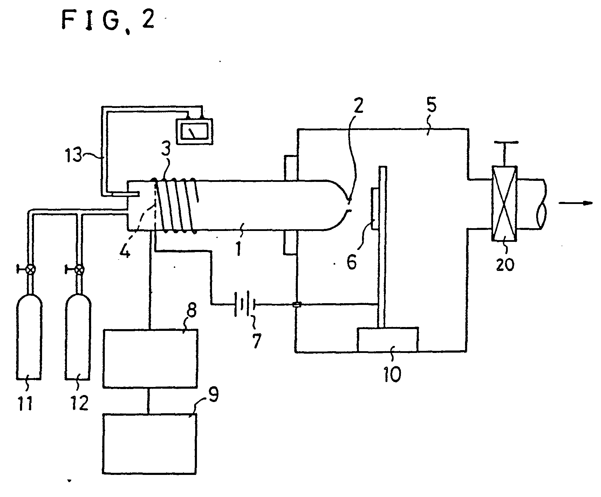

Next, a PI-CVD apparatus is explained concretely in detail with reference to Fig. 2.

Fig. 2 is a schematic diagram showing an example of the PI-CVD apparatus. A plasma tube 1 is connected with a vacuum chamber 5 in a manner that an output part 2 disposed on the tip of the plasma tube opposite to the base material 6 which is held on a base material setting stand 10. A coil 3 is wound around the circumference of the plasma tube. An accelerating electrode 4, which is set at right angle to the flow direction of the plasma, is installed in the plasma tube 1. A direct current electric field is applied between the accelerating electrode 4 and the base material 6 from direct current power supply 7. The plasma tube 1 and the vacuum chamber 5 are evacuated by a vacuum pump through a main valve 20. Therefore, by monitoring the pressure by a Pirani gauge 13 (a thermal conductivity vacuum gauge), methane gas 11 and argon gas 12 are introduced, and high frequency voltage is applied to an exciting coil 3 from a high frequency power supply 9 through a matching box 8. Thereby the gas in the chamber is excited into plasma state. The plasma blows to the base material 6 by the pressure difference between the plasma tube 1 and the vacuum chamber 5 and by acceleration of the ions therein by application of the direct current electric field to the plasma. Thus, a high hardness carbon layer is formed on the surface of the base material 6.

As mentioned above, by the PI-CVD method, it is possible to form a high hardness carbon having a Vicker's hardness of above 200 kg/mm$^2$ in normal temperature without heating, and a high growth rate of maximum 500 nm/minute is obtainable. Therefore the PI-CVD method is suitable for mass production.

Next, the component and the crystal structure of the layer formed by the PI-CVD method is described.

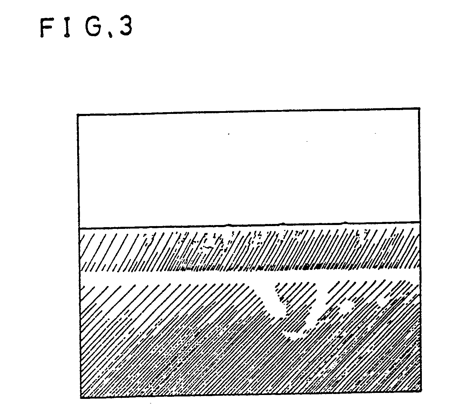

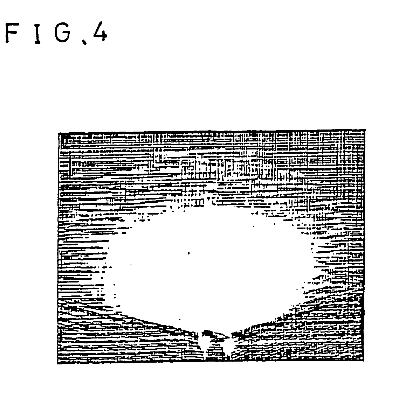

The layer formed by the PI-CVD method is very much homogenous in every direction as shown in Fig. 3, which is a sketch of an electromicroscopic photograph. Through an electron rays diffraction analysis, it is found that ring or spot to show existence of crystal in an electron rays diffraction image can not be observed at all. As shown in Fig. 4, which is a sketch of an electromicroscopic photograph, the high hardness carbon layer formed by PI-CVD method is of a non-crystal (amorphous state) structure.

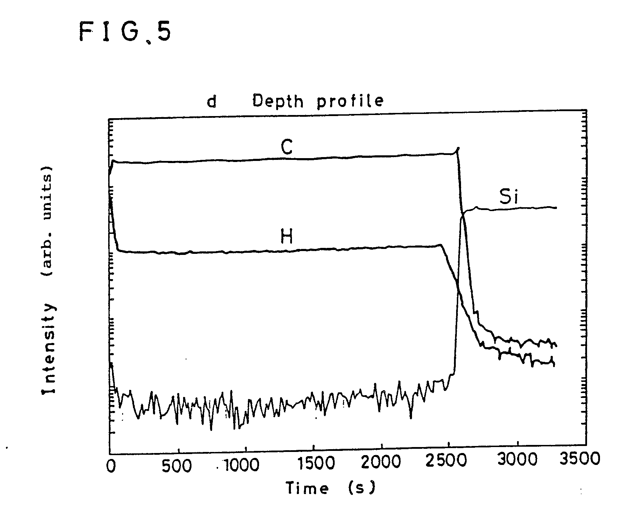

Fig. 5 is a graph which shows the result of a secondary ion mass analysis for the components in a direction of the thickness of the high hardness carbon layer formed on the silicon base film. As shown in Fig. 5, the high hardness carbon layer formed by the PI-CVD method comprises carbon and hydrogen, and is homogenous in the direction of thickness. An SIMS analysis[*] superficially shows that the content of hydrogen is rather high, but this is caused by the fact that sensitivity of hydrogen is higher than that of carbon in SIMS

---

[*] (SIMS stands for "Secondary Ion Mass Spectrometer")

analysis. However, as a result from infrared spectroscopic analysis, it is considered that the content of hydrogen in the layer is small (under 5%), and almost all components of the layer are carbon atoms; and this is confirmed by the fact that a peak showing an existence of the carbon-hydrogen bond can not be observed at all. And further, residual gas, such as oxygen, and inactive gas besides hydrogen gas, such as argon· are contained in the high hardness carbon layer, but they do not influence upon characteristic of the layer.

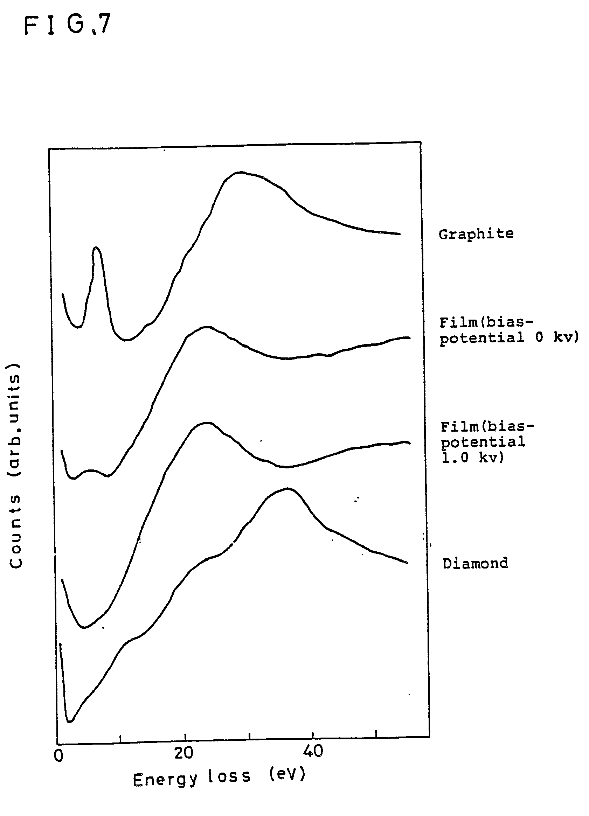

Next, a result of energy loss spectroscopic analysis for bonding structure of carbon atom is shown in Fig. 7. As substances constructed of carbon atoms, there are three kinds of substances, namely, amorphous carbon (such as soot), graphite and diamond. And, as shown in Fig. 7, for the graphite, plasmon peak based on π electron is observed clearly at 6—7 eV of energy loss, and further, even for the amorphous, the plasmon peak is observed to a certain extent. On the other hand, for the diamond, the plasmon peak is not observed at all. Therefore, it becomes a significant criterion for distinguishing a diamond structure from the other structure whether the plasmon peak is observed or not. And further, the plasmon peak observed at above 20 eV of the energy loss (graphite: 26.5 eV diamond: 23 eV—35 eV) is based wholly on valence electrons, and the peak depends on the density thereof.

As mentioned above, in the PI-CVD method, at least ions in the plasma are accelerated, and a hard layer is formed. However, when the ions are not accelerated, the resultant layer is relatively soft (Vicker's hardness: below 1500 kg/mm²). Observing the energy loss spectrum, though slight, the plasmon peak is observed at 6—7 eV of the energy loss. On the other hand, for achieving a hard layer wherein the ions are accelerated in the deposition process thereof, the plasmon peak is not observed at 6—7 eV of the energy loss.

From the above, it is considered that the crystal structure of the high hardness carbon layer formed by the PI-CVD method is of diamond structure carbon, although graphite structure carbon and amorphous carbon are partly contained. And further, a plasmon peak based on valence electrons is observed at 24—25 eV of the energy loss, and it does not agree with the plasmon peaks of graphite and diamond. It is considered that small amounts of the graphite structure or of an amorphous structure are contained in the diamond structure.

As a result of the above-mentioned analyses, it is considered that the high hardness carbon layer formed by the PI-CVD method is a non-crystal carbon layer wherein the graphite carbon, the amorphous carbon and hydrogen are partly contained in the diamond structure carbon. Hereinafter, the high hardness carbon layer formed by the PI-CVD method is referred to as amorphous diamond layer.

In the high hardness carbon layer formed by conventional methods, since the diamond crystal is dotted in the single crystal of the diamond or in the amorphous carbon, the layer is not completely non-crystal and is fundamentally different from the amorphous diamond layer.

The amorphous diamond layer shows Vicker's hardness of above 2000 kg/mm² and is splendid in the wear resistance, and further is coefficient of friction measured by using a steel ball is less than 0.1, and is no more than that of a magnetic tape which contains lubricant. Moreover, the amorphous diamond layer is splended in radiation of frictional heat, because it has a thermal conductivity of about 2.5 J/cm · s · °C, which is equal to metal.

However, it is necessary for the base material to satisfy the following two conditions.

First, one of the two conditions is that the specific resistance of the base material is less than about $10^{13}$ $\Omega \cdot$ cm. The reason of this is that materials having a specific resistance of more than $10^{13}$ $\Omega \cdot$ cm show a characteristic of an insulation material, and when the insulation material is bombarded by plasma containing accelerated ions it is charged with electricity and repells the ions, and thereby, it becomes impossible to form a firm layer. And further, when neutralization means such as irradiation of electron beam is taken, it is possible to form the firm layer, but a material having a specific resistance of more than $10^{13}$ $\Omega \cdot$ cm is not preferable, since the construction of apparatus becomes complicated.

Another condition is that the base material has a large chemical affinity with carbon and strong bonding strength of among atoms in carbide which is formed by the PI-CVD method.

Materials of the base which satisfy the above-mentioned two conditions are metals such as Al, Be, Co, Cr, Fe, Mu, Ni, Zn, Hf, V, Nb, Ta, Mo and W, alloys containing the above-mentioned metals as main component and semiconductors of Si, Ge, B and SiC. Particularly, for Si, B and Cr, it is desirable that these ones strongly combine with carbon in covalent bond.

The specific resistance of the amorphous diamond layer is $10^7$—$10^{13}$ $\Omega \cdot$ cm, and satisfies the above-mentioned first condition.

The ferromagnetic materials such as Co, Cr, Fe and Ni satisfy the above-mentioned two conditions, and therefore, it is possible to form the strong amorphous diamond layer on the surface thereof.

For instance, in case of tape-shaped magnetic recording media, mass production-ability is required, and furthermore, temperature during formation of the protective layer is limited, for the case of using polyethylene as base film. The formation of the amorphous diamond layer on the surface of such recording media is realized by the PI-CVD method for the first time.

As mentioned above, it is possible to form the amorphous diamond layer on the surface of a recording layer made of the ferromagnetic metal, such as Co, Cr, Ni and Fe by the PI-CVD method.

Particularly in case of a ferromagnetic metal layer containing Co and Cr, a strong layer is formed because rather large amounts of Cr are maldistributed in the surface part of the layer.

The amorphous diamond layer is of an amorphous state, and its characteristic resembles a diamond, and therefore, it is possible to protect the recording layer very much efficiently. Since the amorphous diamond layer is of amorphous state, it is soft to a certain extent. Therefore, it is effective as protective layer of the recording layer on a flexible base film such as polyethylene.

And further, for the protective layer a thickness of the amorphous diamond layer of even under 100 nm is enough, because the amorphous diamond layer is splendid in strength and wear resistance. Since the distance from the recording layer to the magnetic head can be made small, the amorphous diamond layer is suitable for the high density recording. And further, as far as an appropriate attention is given to the state of contact with the magnetic head, a high recording reliability is realized even for a thickness of the layer of below 50 nm.

As mentioned above, the specific resistance of the amorphous diamond layer is $10^7$—$10^{13}$ $\Omega \cdot$ cm, and therefore, undesirable static charging of the amorphous diamond layer is smaller in comparison with a glass layer which shows a specific resistance of about $10^{17}$ $\Omega \cdot$ cm. Consequently, in case that the amorphous diamond layer is used as a surface protective layer of disk-shaped magnetic recording media, an accumulation of fine dust onto the protective layer can be prevented, because electrification of the static electricity based on a contact with the magnetic head and friction with the air is decreased.

Example

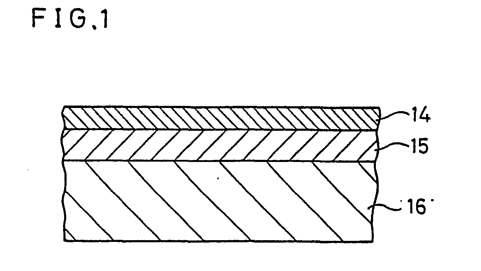

An embodiment of the present invention is shown in Fig. 1. Base material 16 in the form of card, disk or the like, is made of non-magnetic substance such as plastics, glass and metal. A recording layer 15 made of a ferromagnetic metal such as Co, Cr, Ni and Fe is formed by means of such as vacuum vapor deposition or sputtering, and the thickness thereof is made 100—300 nm. For instance, in case of a vertical magnetic recording layer, by adding 10—30% Cr to Co as main component, a column-shaped structure of Co is formed and Cr segregates intercrystalline of the column-shaped structure of Co. In this case, the surface part of the recording layer is rich in Cr.

An amorphous diamond layer 14 is formed by the PI-CVD method on the recording layer 15. For instance, in case of a vertical recording layer made of Co and Cr, the amorphous diamond layer formed has a large adhesive strength, since, as mentioned above, the surface of the recording layer is rich in Cr. Usable thickness of the amorphous diamond layer is below 100 nm, and particularly, thickness of below 30 nm is preferable. Practically, the thickness is determined depending on demand for recording reliability or characteristic of magnetic recording apparatus.

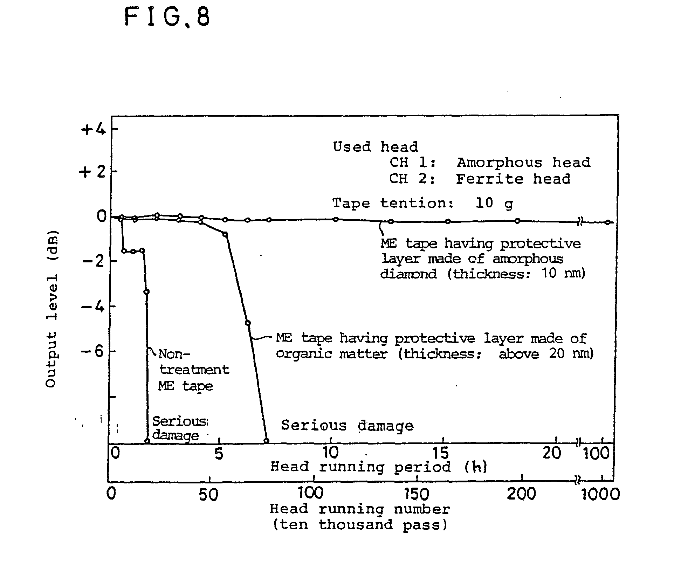

The result of an examination for still durability of tape-shaped magnetic recording media having metal thin layer as recording layer (hereinafter referred to as ME tape) is shown in Fig. 8. In this examination, said metal thin layer is made of Co, Ni and oxide thereof; the tension of the ME tape is 10 g; the winding angle around a cylinder of 40 mm in diameter having rotating heads thereon is 180°. In the above-mentioned examination, the same place of the protective layer is made contact with the rotating head, and thus the condition of the examination is rather severe.

As shown in Fig. 8, for a non-treated ME tape which has no protective layer, the recording layer is entirely worn out, and the output level greatly lowers in about 1.6 hours (numbers of running of the heads are about 180,000 passes). And further, for a ME tape having a protective layer made of organic substance containing fluoline of a thickness of about 20 nm, a serious damage is made, and the output level lowers in about 6.5 hours (the numbers of running of the heads are about 700,000 pass).

On the other hand, for a ME tape having the amorphous diamond layer of 10 nm in the thickness, after above 100 hours have elapsed (the numbers of running of the head is above ten million pass) the output level is not lowered, and further damage is not observed on the magnetic head and the ME tape. As mentioned above, the running durability of the ME tape is very much improved, by forming the amorphous diamond layer having a thickness of about 10 nm as protective layer.

The maximum deposition rate of the amorphous diamond layer reaches 500 nm/minute. And further, it become possible to continuously form the recording layer 15 and the amorphous diamond layer to the tape-shaped (continuous sheet-shaped) base material in an inline system (system of successive formings of magnetic layer and the protective layer). And further, when the deposition rate of the amorphous diamond layer 14 is lower than that of the recording layer 15, the above-mentioned two layers may be formed respectively with different apparatuses.

In case that the amorphous diamond layer 14 is formed on the recording layer by the PI-CVD method, the surface of the recording layer 15 may be cleaned in advance by plasma of argon or oxygen. And further, it is allowable that in order to more improve the durability of the recording media and more decrease the frictional resistance thereof, various surface treatments may be made and other protective layer(s) may be formed on the back surface of the base material 16 and on the surface of the amorphous diamond layer.

As mentioned above, the amorphous diamond layer in the present invention has splendid characteristics such as high hardness, small frictional resistance, excellent thermal conductivity and great chemical stability. Therefore, in case that recording or playback is made on the condition that the magnetic head contacts with the surface of the protective layer disposed on the ferromagnetic metal layer as recording layer, the recording layer can be protected for a long time without damage of the magnetic head.

Accordingly, the magnetic recording media of the present invention are very much effective to realize a high density magnetic recording by using the ferromagnetic metal layer as recording layer.

## Claims

1. A method for making magnetic recording media by forming a recording layer (15) on a base material (16) and by forming an outer layer of carbon characterized in that the said recording layer (15) is made by sputtering or vapor depositing a ferromagnetic material on said base material (16) and that a protective layer (14) made of hard carbon is formed as said outer layer on said recording layer (15) by blowing hydrocarbon gas plasma which contains accelerated ions.

2. A method for making magnetic recording media in accordance with claim 1, wherein said protective layer is made as an amorphous carbon layer mainly composed of diamond structure carbon.

3. A method for making magnetic recording media in accordance with claim 1, wherein said protective layer is made as an amorphous carbon layer containing graphite structure carbon in diamond structure carbon.

4. A method for making magnetic recording media in accordance with claim 1, wherein said protective layer is made as an amorphous carbon layer containing amorphous carbon other than said graphite structure carbon in diamond structure carbon.

5. A method for making magnetic recording media in accordance with claim 1, wherein said protective layer is made as an amorphous carbon layer containing graphite structure carbon and amorphous carbon other than said graphite structure carbon in diamond structure carbon.

6. A method for making magnetic recording media in accordance with claim 1, wherein the hardness of said protective layer is selected above 2000 kg/mm$^2$ in Vicker's hardness.

7. A method for making magnetic recording media in accordance with claim 1, wherein the specific resistance of said protective layer is from $10^7 \, \Omega \cdot cm$ to $10^{13} \, \Omega \cdot cm$.

8. A method for making magnetic recording media by forming a recording layer on a base material and by forming an outer layer of carbon, characterized in that said recording layer (15) is made by sputtering or vapor depositing a ferromagnetic material on said base material (16) and a protective layer (14) made of amorphous diamond is formed as said outer layer on said recording layer (15) under a low-temperature and a low-pressure by blowing hydrocarbon gas plasma which contains accelerated ions, and said recording layer (15) and said protective layer (14) are formed successively in the same chamber.

## Patentansprüche

1. Verfahren zum Herstellen von magnetischen Aufzeichnungsmedien durch Bilden einer Aufzeichnungsschicht (15) an einem Basismaterial (16) und durch Bilden einer äußeren Schicht aus Kohlenstoff, dadurch gekennzeichnet, daß die Aufzeichnungsschicht (15) gebildet ist durch Aufsprühung oder Dampfniederschlagung eines ferromagnetischen Materials auf das Basismaterial (16), und daß eine Schutzschicht (14) aus hartem Kohlenstoff als die äußere Schicht an der Aufzeichnungsschicht (15) gebildet ist durch Aufblasen von Kohlenwasserstoffgasplasma, welches beschleunigte Ionen enthält.

2. Verfahren zum Herstellen von magnetischen Aufzeichnungsmedien nach Anspruch 1, wobei die Schutzschicht als eine amorphe Kohlenstoffschicht gebildet ist, die hauptsächlich aus Kohlenstoff mit Diamantstruktur zusammengesetzt ist.

3. Verfahren zum Herstellen von magnetischen Aufzeichnungsmedien nach Anspruch 1, wobei die Schutzschicht als eine amorphe Kohlenstoffschicht gebildet ist, die Kohlenstoff mit Graphitstruktur in Kohlenstoff mit Diamantstruktur enthält.

4. Verfahren zum Herstellen von magnetischen Aufzeichnungsmedien nach Anspruch 1, wobei die Schutzschicht als eine amorphe Kohlenstoffschicht gebildet ist, die anderen amorphen Kohlenstoff als den Kohlenstoff mit Graphitstruktur in Kohlenstoff mit Diamantstruktur enthält.

5. Verfahren zum Herstellen von magnetischen Aufzeichnungsmedien nach Anspruch 1, wobei die Schutzschicht als eine amorphe Kohlenstoffschicht gebildet ist, die Kohlenstoff mit Graphitstruktur und einen anderen amorphen Kohlenstoff als den Kohlenstoff mit Graphitstruktur in Kohlenstoff mit Diamantstruktur enthält.

6. Verfahren zum Herstellen von magnetischen Aufzeichnungsmedien nach Anspruch 1, wobei die Härte der Schutzschicht so gewählt ist, daß sie oberhalb 2000 kg/mm$^2$ als Vicker's Härte liegt.

7. Verfahren zum Herstellen von magnetischen Aufzeichnungsmedien nach Anspruch 1, wobei der spezifische Widerstand der Schutzschicht im Bereich von $10^7 \, \Omega \cdot cm$ bis $10^{13} \, \Omega \cdot cm$ liegt.

8. Verfahren zum Herstellen von magnetischen Aufzeichnungsmedien durch Bilden einer Aufzeichnungsschicht an einem Basismaterial und durch Bilden einer äußeren Schicht aus Kohlenstoff, dadurch gekennzeichnet, daß die Aufzeichnungsschicht (15) gebildet ist durch Aufsprühung oder Dampfniederschlagung eines ferromagnetischen Materials auf das Basismaterial (16), und eine Schutzschicht (14) aus amorphem Diamant als die äußere Schicht an der Aufzeichnungsschicht (15) gebildet ist bei niedriger Temperatur und niedrigem Druck durch Blasen von Kohlenwasserstoffgasplasma, welches beschleunigte Ionen enthält, und die Aufzeichnungsschicht (15) und die Schutzschicht (14) aufeinanderfolgend in derselben Kammer gebildet werden.

## Revendications

1. Procédé pour fabriquer des supports d'enregistrement magnétique en formant une couche d'enregistrement (15) sur un matériau de base (16) et en formant une couche extérieure de carbone, caractérisé en ce que la couche d'enregistrement (15) est réalisée en pulvérisant ou déposant en phase vapeur un matériau ferromagnétique sur le matériau de base (16) et en ce qu'une couche de protection (14) en carbone dur est formée comme couche extérieure sur la couche d'enregistrement (15) par soufflage d'un plasma d'hydrocarbure gazeux qui contient des ions accélérés.

2. Procédé pour fabriquer des supports d'enregistrement magnétique selon la revendication 1, dans lequel la couche de protection est réalisée sous forme d'une couche de carbone amorphe composée principalement d'un carbone ayant la structure du diamant.

3. Procédé pour fabriquer des supports d'enregistrement magnétique selon la revendication 1, dans lequel la couche de protection est réalisée sous forme d'une couche de carbone amorphe contenant du carbone à structure de graphite dans du carbone à structure de diamant.

4. Procédé pour fabriquer des supports d'enregistrement magnétique selon la revendication 1, dans lequel la couche de protection est réalisée sous forme d'une couche de carbone amorphe contenant du carbone amorphe autre que le carbone à structure de graphite dans du carbone à structure de diamant.

5. Procédé pour fabriquer des supports d'enregistrement magnétique selon la revendication 1, dans lequel la couche de protection est réalisée sous forme d'une couche de carbone amorphe contenant du carbone à structure de graphite et du carbone amorphe autre que le carbone à structure de graphite dans du carbone à structure de diamant.

6. Procédé pour fabriquer des supports d'enregistrement magnétique selon la revendication 1, dans lequel la dureté de la couche de protection est choisie au-dessus de 2000 kg/mm$^2$ en dureté Vicker.

7. Procédé pour fabriquer des supports d'enregistrement magnétiques selon la revendication 1, dans lequel la résistance spécifique de la couche de protection est comprise entre $10^7 \, \Omega \cdot cm$ et $10^{13} \, \Omega \cdot cm$.

8. Procédé pour fabriquer des supports d'enregistrement magnétique en formant une couche d'enregistrement sur un matériau de base et en formant une couche extérieure de carbone, caractérisé en ce que la couche d'enregistrement (15) est obtenue en pulvérisant ou en déposant en phase vapeur un matériau ferromagnétique sur le matériau de base (16) et une couche de protection (14) en diamant amorphe est formée comme couche extérieure sur la couche d'enregistrement (15) sous faible température et basse pression par soufflage d'un plasma d'hydrocarbure gazeux qui contient des ions accélérés, et la couche d'enregistrement (15) et la couche de protection (14) sont formées successivement dans la même chambre.

FIG.1

FIG. 2

F I G.3

FIG.4

# FIG.5

d    Depth profile

# FIG.6

Mode       Double
S.Rat        2.00
Resol        8.00
Times       1000
Ngain         2
Inter         1

Position
1
2
3

# F I G. 7

# F I G. 8